# EUROPEAN PATENT SPECIFICATION

(11) **EP 3 833 601 B1**
(45) Date of publication and mention of the grant of the patent: **01.03.2023**
(21) Application number: 19752182.6
(22) Date of filing: 08.08.2019
(51) Int. Cl.: B64F 1/305, B64C 1/14

(54) **METHOD FOR DETECTING A DOOR STATUS OF AN AIRCRAFT DOOR**
VERFAHREN ZUR ERFASSUNG DES TÜRZUSTANDS EINER FLUGZEUGTÜR
PROCÉDÉ POUR DÉTECTER UN ÉTAT DE PORTE D'UNE PORTE D'AÉRONEF

(30) Priority: 09.08.2018 EP 18382603; 12.09.2018 DE 102018215519
(43) Date of publication of application: 16.06.2021
(73) Proprietor: TK Escalator Norte, S.A., 33682 Mieres (ES)
(72) Inventor: ÁLVAREZ CUERVO, Adrián, 33402 Avilés (ES); PÉREZ PÉREZ, Marcos, 33012 Oviedo (ES); MENDIOLAGOITIA JULIANA, José, 33203 Gijón (ES); SESMA SANCHEZ, Francisco Javier, 33204 Gijón (ES); GONZALEZ MIERES, Isabel, 33204 Gijón (ES)
(74) Representative: Jacobi, Nicolas
(86) International application number: PCT/EP2019/071307
(87) International publication number: WO 2020/030735

(56) References cited:
- WO-A1-2016/038760
- US-A1- 2007 119 003
- US-A1- 2018 074 474

## Description

The invention refers to a method for detecting a door status of an aircraft door.

Nowadays the docking of the passenger boarding bridge (PBB) to an aircraft is performed manually. An operator is using a joystick, giving immediate operation signals to the drive means. This kind of docking is time consuming and requires a well-trained operator. In case the operator is still busy at another PBB, the docking is delayed, which leads to costly delays in ground handling of aircrafts. Consequently, the market requires a possibility of automatic docking, in which no fully trained and certified operator is needed through the complete docking procedure anymore. In the context of automatization of the procedure in connection with the docking procedure it has found out, that it is helpful to get a confirmation of the status of the aircraft door.

WO 2016 / 038760 A1 discloses a door status detector for an aircraft door. The door closing status detector may be a photodetector such as an infrared sensor. Here the opening and closing of the door is detected by the change of amount of the infrared energy due to reflection and transmission of the infrared light from the detector by the door.

US 2007 / 119003 A1 discloses a method for aligning a passenger boarding bridge to a doorway of an aircraft. The method for aligning an aircraft-engaging end of a passenger boarding bridge to a doorway of an aircraft includes waiting for the aircraft to park within a parking space that is adjacent to the passenger boarding bridge. A determination is made of a status of the aircraft doorway, wherein the status is indicative of a door panel being either closed or open. In dependence upon the determined status being indicative of the door panel being open, an alignment operation is performed for adjusting the aircraft engaging-end of the passenger boarding bridge into an aligned relationship relative to the aircraft doorway.

It is the object of the invention to provide an alternative, in particular improved, solution for detecting the door status of an aircraft. This object is solved by a method, an image recognition system and an arrangement according to the main claims; embodiments are subject to the subclaims and the description.

The inventive method for detection a door status of an aircraft door comprising the following steps:
taking a first image of the aircraft door when the aircraft door is still closed;
   - detecting at least a reference indicator on the door surface in the first image and determining a first position of
the reference indicator;
   - taking a third image of the aircraft door after taking said first image
   - searching for said reference indicator in the third image and detecting a third position of said reference indicator;
   - determining that the door status is closed if the third position conforms to the first position.

Within this application the term door status is meant as an indicator whether the door is open or closed. The term door status detector is meant as a detector which can detect the door status.

By comparing the third image with the first image consistencies between said images can be obtained. On the basis of these consistencies the door status is detected. If there are no consistencies, the door status may be detected as "not closed", consequently the door status can be determined as "open".

In an embodiment the door status is detected as "open", if it is not possible to detect that the third position conforms to the first position. Here any status which is not "closed" is assessed as "open", even if the door is merely partially opened.

In an embodiment an optional second image is taken between taking the first image and the third image, and it is searched for the reference indicator; it is determined that the door status is open if the reference indicator is not found in the second image in the first position and/or in the second image at all. Here the door status of an aircraft may be detected, in which the door performs a rotating movement during opening, e.g. the B737. Unless the indicator is not found in its first position, the door is not assessed as being closed.

It is to be understood that using the term "third image" does not require the provision of at least three images. Rather the term "third", as well as the terms "first" and "second" are to be understood as terms making the individual images mentioned within this invention distinguishable from each other.

The aforementioned embodiments may be based on the principle of exclusion. Since it is not determined that the door status is closed it is concluded that the door is open. However the door open status may not be verified.

In an embodiment a verified door open status is provided, in particular the determination of the open door status is not just based on the principle of exclusion.

In an embodiment is determined that the door is open if the reference indicator is found in the second image at a second position which is different to the first position, in particular wherein the difference between the first position and the second position is more than 20cm, in particular measured in longitudinal direction of the aircraft. In contrast to the aforementioned principle of exclusion here the open status can be verified by detecting the indicator at a certain position, distant from its original position in the first image. Consequently it can be detected, that the reference indicator has performed a certain amount of movement, which can be put on the same level as an opening movement of the door.

In an embodiment before determining the door status, aircraft specific information is retrieved, in particular from database. The aircraft specific information refers to the aircraft, to which the aircraft door belongs. The aircraft specific information may comprise information about indicators, in particular their shape and/or position within the aircraft fuselage. This may help to identify a certain visual structure as a reference indicator.

In an embodiment the retrieved information contains data whether the door is a parallel opening door or a rotating door (door type information). In particular the system may know that the B737 has a rotating door and the A520 has a parallel opening door. An information containing the aircraft type may already implicitly contain the required door type information. In an embodiment it is detected from the taken images, whether the door is a parallel opening door or a rotating door.

In the inventive method for operating a passenger boarding bridge, the method for detection of the opening/closing status of a door of an aircraft is used as described above. Thereby the first image is taken after the passenger boarding bridge has started docking the aircraft and when the door is closed; the third image is taken after the door has been opened and passengers have entered the aircraft. Now the door status is relevant in particular for starting the next steps for automated undocking. As long as the door status is not detected as closed, in particular undocking must not be started. In particular the passenger boarding bridge is not undocked before it is determined, that the third position of at least one indicator conforms to the first position of said indicator.

The invention is explained in more detail by means of the figures, the figures show:
- Fig. 1: an aircraft and a passenger boarding bridge in top view;
- Fig. 2: the front area of an aircraft of a first type in side view during the inventive method;
- Fig. 5: the front area of an aircraft of a second type in side view during the inventive method.

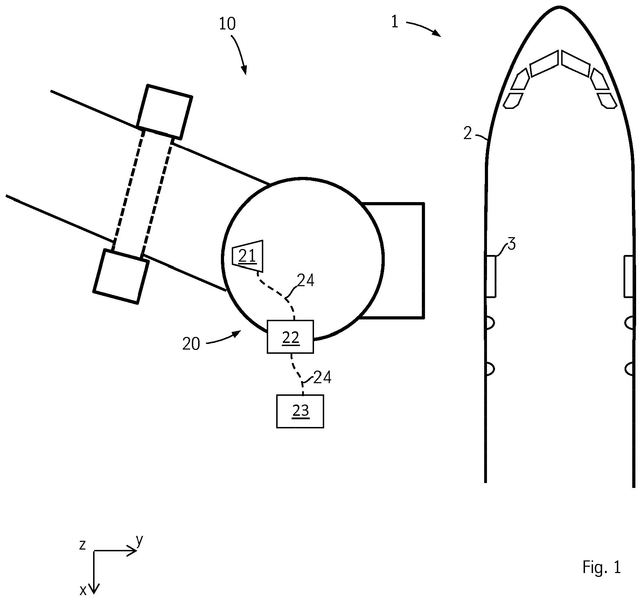

Figure 1 shows an arrangement, to which the invention can be applied. An aircraft 1 is located at a gate of an airport. A passenger boarding bridge 10 is to be docked to the aircraft 1. An image recognition device 20 is provided. The image recognition device 20 comprises a camera 21 (in particular a stereo camera) which is located at the passenger boarding bridge 1, facing a door 3 of the plane 1, when the aircraft 1 is docked or shortly before docking is finished. The term "camera" comprises also any suitable image recording device. The image recognition device 20 further comprises a computer 22 for analyzing any images taken by the camera 21. The computer 22 may be located within the passenger boarding bridge 1 or may be located at a remote location and may be connected via a data connection 24 to the camera. The computer 22 has access to a database 23. The database 23 may be incorporated into the computer 22 or may be located remote to the computer 21. If necessary a data connection 24 can be established between the camera 21 and the computer 22 and/or between the computer 22 and the database 23, in particular via a hard wire or via the internet.

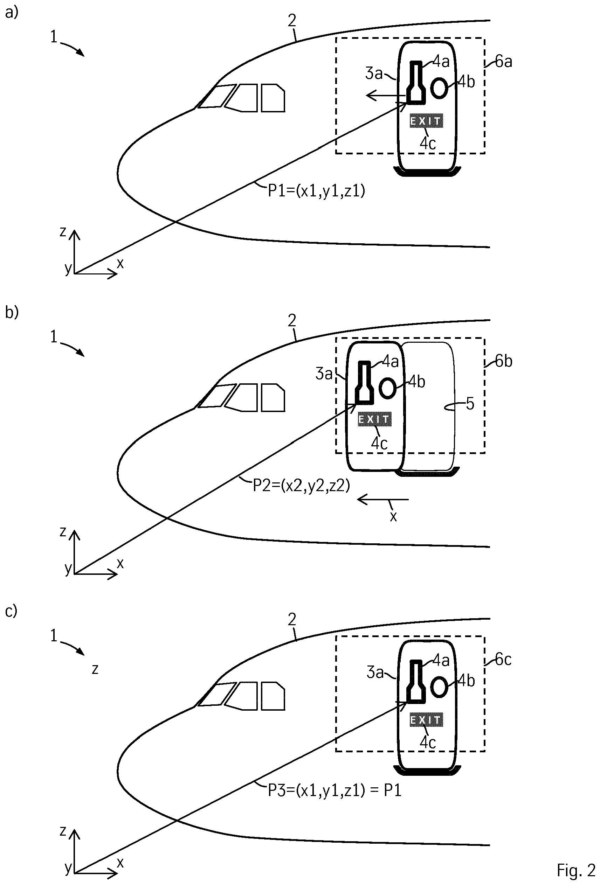

Figure 2 shows a front area of an aircraft 1 of a first type in side view during the steps of the method. The aircraft 1 has a fuselage and a door 3a closing a door frame 5 within the fuselage 2.

The image recognition device 20 is acquired for taking several images 6 of the fuselage 2, at least partially covering the door 3a. A first image 6a is taken when the door is still closed (figure 2a). Here the image recognition device 20 detects several reference indicators 4 on the door surface, which may be the contour of a door opening lever 4a, a window ring 4b or a text field 4c.

At first a door is detected within the image. A suitable method for detecting a door within the fuselage of an aircraft by image recognition is described in European patent application 18 382 372.3 and any other patent application claiming its priority, not yet published.

In a step when the door 5 is still closed (figure 2a), at least one of the reference indicators 4, e.g. indicator 4a, is detected and it's initial, first position P1=(x1,y1,z1) within an coordinate system x,y,z is stored e.g. in the database 23. Instead of the indicator 4a one or more of the other indicators may be used. Subsequently when the door 5 is opened (figure 2b), the indicators 4a will move together with the door 5 into an opened position. At the original position of the door 5 the empty door frame 5 gets visible, as shown in figure 2b.

Now the image recognition device 20 takes a second image 6b. The image recognition device 20 searches in the second image 6b for the stored reference indicator 4a-c. The image recognition device 20 finds the same indicators 4a in a second position P2 (x2, y2, z2) which is about 1m left of the first position. From this positional difference it is determined, that the door 5 is open.

Subsequently when the door 3a is closing, the indicator 4a moves together with the door 5 back into its initial, first position P1, as shown in figure 2c. Now the image recognition device 20 takes a third image 6c and searches herein for the stored reference indicator 4a. The image recognition device 20 finds the same indicator 4a back in the first position P1. Based on this positional identity it is determined, that the indicators 4a is now again in it's closed position, consequently it is determined, that the door 3a is closed.

The aforementioned procedure is applicable for a first type of aircraft, e.g an Airbus A520. This type of aircraft has a door 3 performing parallel translation. Here the outer surface of the door always faces in the same direction, i.e. in direction to the camera 21.

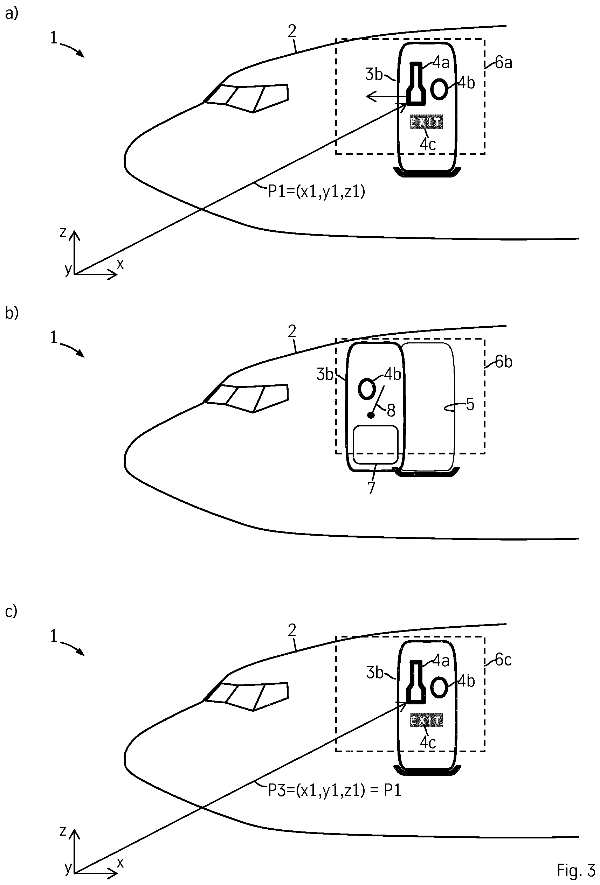

In contrast thereto a second type of aircraft, e.g. a Boeing 737, has a door 3b, which performs a rotational movement. Figures 5 shows an area of the aircraft 1 of the second type in side view. During opening the door 3b is turned around about 180°. Consequently when the door 3b is opened, at least some of the indicators 4 are not visible anymore by the image recognition device. It may possible, that a window ring 4b may be still visible, but the appearance may be different to the shape when viewed from the other side. The other indicators 4a, 4c are not visible at all. Instead other components like an emergency chute container 7 or an opening lever 8 may dominate the image 6b taken in the open status of the door 3b (figure 3b).

But as analogously described for the first aircraft type also for the second aircraft type in the situation of figure 2b the image recognition device is not able to detect, that the position of indicators 4a-c detected during the closed status (figure 3a) can be found in their original position when the door 5 is open (figure 3b). Consequently the system cannot confirm that the door 5 is closed, consequently the door 3b is determined as being open.

In an embodiment the first picture 6a is taken when docking is finished or nearly finished, but before the door has been opened for the passengers to leave the aircraft. The second image (or several of second pictures) are taken before undocking has been started. Now it can be determined that the door is still open. The status "door open" leads to a signal, which prevents the passenger boarding bridge from undocking.

Not before the picture recognition device 20 provides a signal "door closed" the passenger boarding bridge may start an automated or semi-automated undocking procedure. Undocking means, that a bridgehead of the passenger boarding bridge is moved away from the fuselage 2.

The camera 21 used within this method may be the same camera which may be used for supporting automated docking and/or automated docking.

### list of reference signs

- 1: aircraft
- 2: aircraft fuselage
- 5: aircraft door
- 4: reference indicator
- 5: door frame
- 6: area of captured image
- 7: emergency chute container
- 8: opening lever
- 10: passenger boarding bridge
- 20: image recognition device
- 21: camera
- 22: computer
- 23: database
- 24: data connection
- P: position
- x,y,z: coordinated

## Claims

1. Method for detecting a door status of an aircraft door (3), wherein the door status indicates whether the aircraft door (3) is opened or closed,
the method comprising the following steps:
- taking a first image (6a) of the aircraft door (3) when the aircraft door (3) is still closed;
- taking a third image (6c) of the aircraft door (3) after taking said first image (6a), **characterized by** the steps:
- detecting at least a reference indicator (4) on the door surface in the first image (6a) and determining a first position (P1) of the reference indicator (4);
- searching for said reference indicator (4) in the third image (6c) and detecting a third position (P3) of said reference indicator (4);
- determining that the door status is closed if the third position (P3) conforms to the first position (P1).

2. Method according to the preceding claim, further comprising determining that the door status is open if it is not possible to determine that the third position (P3) conforms to the first position (P1).

3. Method according to any of the preceding claims, further comprising taking a second image (6b) between taking the first image (6a) and taking the third image (6c), and searching for said reference indicator (4) in the second image (6b); wherein it is determined that the door status is open if said reference indicator (4) is not found in the second image (6b) in the first position (P1).

4. Method according to any of the preceding claims, further comprising taking a second image (6b) between taking the first image (6a) and the third image (6c), and searching for said reference indicator (4) in the second image (6b); wherein it is determined that the door status is open if said reference indicator (4) is not found in the second image (6b) at all.

5. Method according to any of the preceding claims, further comprising determining that the aircraft door (3) is open if said reference indicator (4) is found in a second image (6b) at a second position (P2) which is different to the first position (P1), in particular wherein the difference between the first position (P1) and the second position (P2) is more than 20cm, in particular measured in longitudinal direction (x) of the aircraft (1).

6. Method according to any of the preceding claims, wherein before determining the door status (3), aircraft specific information, in particular a door type information, is retrieved, in particular from a database (23).

7. Method according to the preceding claim, wherein the retrieved information contains data whether the door (3) is a parallel opening door (3a) or a rotating door (3b).

8. Method according to any of the preceding claims, further comprising determining door type information from the taken images, in particular whether the door (3) is a parallel opening door (3a) or a rotating door (3b).

9. Method for operating a passenger boarding bridge (1), the method comprising the steps of the method for detecting a door status of an aircraft door (3), wherein the door status indicates whether the aircraft door (3) is opened or closed, according to any of the preceding claims, wherein the first image (6a) is taken after the passenger boarding bridge (10) has started docking the aircraft (1) and when the aircraft door (3) is closed; the third image (6a) is taken after the aircraft door (3) has been opened and passengers have entered the aircraft (1).

10. Method according to the preceding claim, wherein the passenger boarding bridge (1) is not undocked before it is determined, that the third position (P3) of at least one indicator (4a) conforms to the first position (P1) of said indicator (4a).

11. Image recognition device (20), adapted to conduct a method according to any of claims 1 to 8.

12. Arrangement comprising a passenger boarding bridge (10) and an image recognition device (20) according to the preceding claim.

## Patentansprüche

1. Verfahren zum Detektieren eines Türstatus einer Flugzeugtür (3), wobei der Türstatus anzeigt, ob die Flugzeugtür (3) offen oder geschlossen ist, wobei das Verfahren die folgenden Schritte umfasst:
- Aufnehmen eines ersten Bildes (6a) der Flugzeugtür (3), wenn die Flugzeugtür (3) noch geschlossen ist;
- Aufnehmen eines dritten Bildes (6c) der Flugzeugtür (3) nach dem Aufnehmen des ersten Bildes (6a), **gekennzeichnet durch** die folgenden Schritte:
- Detektieren zumindest eines Referenzindikators (4) auf der Türoberfläche in dem ersten Bild (6a) und Bestimmen einer ersten Position (P1) des Referenzindikators (4);
- Suchen nach dem Referenzindikator (4) in dem dritten Bild (6c) und Detektieren einer dritten Position (P3) des Referenzindikators (4);
- Bestimmen, dass der Türstatus geschlossen ist, wenn die dritte Position (P3) mit der ersten Position (P1) übereinstimmt.

2. Verfahren nach dem vorhergehenden Anspruch, das ferner Folgendes umfasst:
Bestimmen, dass der Türstatus offen ist, wenn es nicht möglich ist, zu bestimmen, dass die dritte Position (P3) mit der ersten Position (P1) übereinstimmt.

3. Verfahren nach einem der vorhergehenden Ansprüche, das ferner Folgendes umfasst:
Aufnehmen eines zweiten Bildes (6b) zwischen dem Aufnehmen des ersten Bildes (6a) und dem Aufnehmen des dritten Bildes (6c) und Suchen nach dem Referenzindikator (4) in dem zweiten Bild (6b);
wobei bestimmt wird, dass der Türstatus offen ist, wenn der Referenzindikator (4) in dem zweiten Bild (6b) nicht in der ersten Position (P1) gefunden wird.

4. Verfahren nach einem der vorhergehenden Ansprüche, das ferner Folgendes umfasst:
Aufnehmen eines zweiten Bildes (6b) zwischen dem Aufnehmen des ersten Bildes (6a) und des dritten Bildes (6c) und Suchen nach dem Referenzindikator (4) in dem zweiten Bild (6b);
wobei bestimmt wird, dass der Türstatus offen ist, wenn der Referenzindikator (4) in dem zweiten Bild (6b) überhaupt nicht gefunden wird.

5. Verfahren nach einem der vorhergehenden Ansprüche, das ferner Folgendes umfasst:
Bestimmen, dass die Flugzeugtür (3) offen ist, wenn der Referenzindikator (4) in einem zweiten Bild (6b) an einer zweiten Position (P2) gefunden wird, die sich von der ersten Position (P1) unterscheidet, wobei insbesondere der Unterschied zwischen der ersten Position (P1) und der zweiten Position (P2) mehr als 20 cm beträgt, insbesondere gemessen in Längsrichtung (x) des Flugzeugs (1).

6. Verfahren nach einem der vorhergehenden Ansprüche, wobei vor dem Bestimmen des Türstatus (3) flugzeugspezifische Informationen, insbesondere Türtypinformationen, insbesondere aus einer Datenbank (23), abgerufen werden.

7. Verfahren nach dem der vorhergehenden Anspruch, wobei die abgerufenen Informationen Daten darüber enthalten, ob die Tür (3) eine parallel öffnende Tür (3a) oder eine Drehtür (3b) ist.

8. Verfahren nach einem der vorhergehenden Ansprüche, das ferner Folgendes umfasst:
Bestimmen von Türtypinformationen aus den aufgenommenen Bildern, insbesondere ob die Tür (3) eine parallel öffnende Tür (3a) oder eine Drehtür (3b) ist.

9. Verfahren zum Betreiben einer Fluggastbrücke (1), wobei das Verfahren die Schritte des Verfahrens zum Detektieren eines Türstatus einer Flugzeugtür (3) nach einem der vorhergehenden Ansprüche umfasst, wobei der Türstatus anzeigt, ob die Flugzeugtür (3) offen oder geschlossen ist, wobei
das erste Bild (6a) aufgenommen wird, nachdem die Fluggastbrücke (10) mit dem Andocken an das Flugzeug (1) begonnen hat, und wenn die Flugzeugtür (3) geschlossen ist;
das dritte Bild (6c) aufgenommen wird, nachdem die Flugzeugtür (3) geöffnet worden ist und Fluggäste das Flugzeug (1) betreten haben.

10. Verfahren nach dem vorhergehenden Anspruch, wobei die Fluggastbrücke (1) nicht abgedockt wird, bevor bestimmt worden ist, dass die dritte Position (P3) des mindestens einen Indikators (4a) mit der ersten Position (P1) des Indikators (4a) übereinstimmt.

11. Bilderkennungsvorrichtung (20), die dafür ausgelegt ist, ein Verfahren nach einem der Ansprüche 1 bis 8 auszuführen.

12. Anordnung, die eine Fluggastbrücke (10) und eine Bilderkennungsvorrichtung (20) nach dem vorhergehenden Anspruch umfasst.

## Revendications

1. Procédé de détection d'un état de porte d'une porte (3) d'aéronef, l'état de porte indiquant si la porte (3) d'aéronef est ouverte ou fermée, le procédé comportant les étapes suivantes :
- prendre une première image (6a) de la porte (3) d'aéronef lorsque la porte (3) d'aéronef est encore fermée
- prendre une troisième image (6c) de la porte (3) d'aéronef après avoir pris ladite première image (6a), **caractérisé par** les étapes consistant à :
- détecter au moins un indicateur (4) de référence sur la surface de porte dans la première image (6a) et déterminer une première position (P1) de l'indicateur (4) de référence ;
- rechercher ledit indicateur (4) de référence dans la troisième image (6c) et détecter une troisième position (P3) dudit indicateur (4) de référence ;
- déterminer que l'état de porte est fermé si la troisième position (P3) concorde avec la première position (P1).

2. Procédé selon la revendication précédente, comportant en outre le fait de déterminer que l'état de porte est ouvert s'il n'est pas possible de déterminer que la troisième position (P3) concorde avec la première position (P1).

3. Procédé selon l'une quelconque des revendications précédentes, comportant en outre la prise d'une deuxième image (6b) entre la prise de la première image (6a) et la prise de la troisième image (6c), et la recherche dudit indicateur (4) de référence dans la deuxième image (6b) ;
**caractérisé en ce qu'**il est déterminé que l'état de porte est ouvert si ledit indicateur (4) de référence n'est pas trouvé dans la deuxième image (6b) dans la première position (P1).

4. Procédé selon l'une quelconque des revendications précédentes, comportant en outre la prise d'une deuxième image (6b) entre la prise de la première image (6a) et de la troisième image (6c), et la recherche dudit indicateur (4) de référence dans la deuxième image (6b) ;
**caractérisé en ce qu'**il est déterminé que l'état de porte est ouvert si ledit indicateur (4) de référence n'est pas trouvé du tout dans la deuxième image (6b).

5. Procédé selon l'une quelconque des revendications précédentes, comportant en outre le fait de déterminer que la porte (3) d'aéronef est ouverte si ledit indicateur (4) de référence est trouvé dans une deuxième image (6b) à une deuxième position (P2) qui est différente de la première position (P1), la différence entre la première position (P1) et la deuxième position (P2) étant en particulier de plus de 20 cm, en particulier mesurée dans une direction longitudinale (x) de l'aéronef (1).

6. Procédé selon l'une quelconque des revendications précédentes, des informations spécifiques à l'aéronef, en particulier une information de type de portes, étant récupérées avant de déterminer l'état de la porte (3), en particulier à partir d'une base de données (23).

7. Procédé selon la revendication précédente, les informations récupérées contenant des données selon lesquelles la porte (3) est une porte (3a) à ouverture parallèle ou une porte pivotante (3b).

8. Procédé selon l'une quelconque des revendications précédentes, comportant en outre la détermination d'une information de type de portes à partir des images prises, en particulier si la porte (3) est une porte (3a) à ouverture parallèle ou une porte pivotante (3b).

9. Procédé d'exploitation d'une passerelle (1) d'embarquement de passagers, le procédé comportant les étapes du procédé de détection d'un état de porte d'une porte (3) d'aéronef, l'état de porte indiquant si la porte (3) d'aéronef est ouverte ou fermée, selon l'une quelconque des revendications précédentes, la première image (6a) étant prise après que la passerelle (10) d'embarquement de passagers a commencé à se connecter à l'aéronef (1) et lorsque la porte (3) d'aéronef est fermée ;
la troisième image (6a) étant prise après que la porte (3) d'aéronef a été ouverte et que les passagers sont entrés dans l'aéronef (1).

10. Procédé selon la revendication précédente, la passerelle (1) d'embarquement de passagers n'étant pas déconnectée avant qu'il soit déterminé que la troisième position (P3) d'au moins un indicateur (4a) concorde avec la première position (P1) dudit indicateur (4a).

11. Dispositif (20) de reconnaissance d'images, prévu pour réaliser un procédé selon l'une quelconque des revendications 1 à 8.

12. Agencement comportant une passerelle (10) d'embarquement de passagers et un dispositif (20) de reconnaissance d'images selon la revendication précédente.
